# FASCICULE DE BREVET EUROPEEN

(11) **EP 4 494 597 B1**
(45) Date de publication et mention de la délivrance du brevet: **28.10.2026**
(21) Numéro de dépôt: 24182675.9
(22) Date de dépôt: 17.06.2024
(51) Int. Cl.: A61C 7/36

(54) **DISPOSITIF ORTHODONTIQUE ET SON PROCÉDÉ DE FABRICATION**
ORTHODONTISCHE VORRICHTUNG UND VERFAHREN ZU IHRER HERSTELLUNG
ORTHODONTIC APPARATUS AND METHOD FOR MANUFACTURING SAME

(30) Priorité: 21.07.2023 FR 2307868
(43) Date de publication de la demande: 22.01.2025
(73) Titulaire: Orthogem Développement, 63000 Clermont-Ferrand (FR)
(72) Inventeur: MARIE-CATHERINE, Franck, 63000 Clermont-Ferrand (FR)
(74) Mandataire: Ipsilon

(56) Documents cités:
- EP-A1- 2 198 802
- WO-A1-02/22040
- DE-A1- 10 346 489
- DE-C1- 10 216 242
- US-A- 5 645 424

## Description

### Domaine technique

La présente invention est dans le domaine de l'orthodontie. Elle concerne plus particulièrement un dispositif orthodontique apte à provoquer un déplacement d'une mandibule par rapport à un maxillaire et comportant notamment deux biellettes. L'invention permet d'avoir un dispositif ajustable après pose sur le patient, afin d'être le mieux possible adapté à sa morphologie et à son programme de traitement.

### Technique antérieure

Différentes solutions ont été proposées pour provoquer un déplacement de la mandibule par rapport au maxillaire. Le but recherché est de déplacer la mandibule par rapport à sa position d'origine d'une très faible distance de l'ordre de quelques millimètres, dans un premier temps, afin, notamment, de stimuler la croissance. Cette propulsion mandibulaire peut être utilisée dans le cadre d'un traitement orthodontique de classe II ou de classe III, ou encore pour augmenter le flux respiratoire, afin de régler les problèmes de syndromes d'apnée du sommeil.

L'invention concerne plus particulièrement un ensemble orthodontique du type parfaitement connu pour un homme du métier, sous le nom de « orthèse de Herbst » ou « bielles de Herbst ».

Pour l'essentiel, ce type d'orthèse présente des gouttières coopérant, respectivement, avec la rangée de dents du haut et la rangée de dents du bas. Ces gouttières sont généralement réalisées dans un matériau rigide, par exemple en résine acrylique thermoformée, et sont reliées l'une à l'autre par un système de biellettes montées avec capacité de coulissement. Plus particulièrement, deux biellettes métalliques sont disposées, respectivement, de chaque côté de la gouttière supérieure et de la gouttière inférieure. Les deux biellettes sont reliées avec capacité d'articulation sur les gouttières habituellement par l'intermédiaire d'une armature, sensiblement au niveau des premières molaires pour la gouttière supérieure et sensiblement au niveau de la canine pour la gouttière inférieure.

Le document EP2198802 propose un dispositif d'orthodontie de ce type. Un inconvénient de ce dispositif est que l'armature et les biellettes étant rigides, il est nécessaire de les fabriquer de façon très précise afin de s'adapter au mieux à la morphologie du patient et au programme de traitement. Dans certains cas, ces éléments ne correspondent pas parfaitement au patient, ce qui résulte soit en un traitement sous-optimal, soit dans une fabrication d'un des éléments à nouveau, ce qui engendre un des coûts et une perte de temps. Ce problème est d'autant plus courant que le dispositif étant le plus souvent utilisé chez l'enfant, sa morphologie se modifie constamment et de façon parfois imprévue avec la croissance.

Il est également connu les documents WO02/22040 et DE 103 46 489 qui décrivent des dispositifs orthodontiques de l'art antérieur, dont la position des biellettes par rapport à la mandibule et au maxillaire du patient ne peut pas être ajustée par un praticien après fixation dudit dispositif sur le patient.

### Exposé de l'invention

La présente invention vise à pallier ces inconvénients en proposant un dispositif orthodontique comportant un fil qui peut être tordu après pose sur le patient, afin d'ajuster finement la position des biellettes sur le patient.

Dans ce but, l'invention concerne un dispositif orthodontique apte à provoquer un déplacement d'une mandibule par rapport à un maxillaire défini par les revendications 1 à 8. Le dispositif orthodontique comportant une partie inférieure apte à être solidaire de ladite mandibule, une partie supérieure apte à être solidaire dudit maxillaire, et deux biellettes télescopiques reliant les parties supérieure et inférieure, ledit dispositif comprenant, pour chaque biellette, des moyens d'accouplement avec la partie inférieure et avec la partie supérieure, chaque moyen d'accouplement comportant une pièce de liaison mobile par rapport à une des extrémités de ladite biellette, tel que pour au moins un moyen d'accouplement, ledit dispositif comporte un fil dont une première extrémité est solidaire de ladite pièce de liaison, et la seconde extrémité est fixée à la partie inférieure ou supérieure correspondante, le fil étant configuré pour pouvoir être tordu par un praticien après fixation dudit dispositif sur un patient.

Grâce à ces dispositions, le dispositif d'orthodontie peut être ajusté après pose sur le patient, ce qui permet de l'adapter au mieux à l'anatomie du patient et au programme de traitement. En particulier, la position latérale et l'inclinaison des biellettes peuvent être ajustées finement, afin d'être adaptées au mieux aux articulations de la bouche.

Ledit fil peut avoir un diamètre compris entre 0.9 et 2.0 mm, ce qui au vu des matériaux utilisés classiquement en orthodontie lui permet d'être suffisamment flexible pour être tordu à la main, notamment avec une pince, après pose sur un patient, mais pas trop flexible pour que cette torsion soit durable.

Ledit fil peut avoir un module de rigidité compris entre 65 et 90 GPa et un module d'élasticité compris entre 150 et 230 GPa, ce qui permet d'obtenir la flexibilité et la résistance voulue pour que le fil puisse plier sans rompre, tout en gardant sa forme pliée.

Ledit fil peut être en alliage chrome-cobalt ou en acier inoxydable, matériaux peu chers et efficaces.

Le chrome-cobalt est préféré car il est généralement plus souple et flexible que l'acier inoxydable. Le chrome-cobalt est un alliage métallique utilisé principalement en dentisterie et en orthopédie, notamment pour la fabrication de prothèses dentaires, d'implants et de dispositifs médicaux. Il est apprécié pour sa résistance élevée, sa durabilité et sa biocompatibilité.

Comparé à l'acier inoxydable, le chrome-cobalt présente une résistance à la flexion supérieure, ce qui signifie qu'il peut plier et fléchir sans se rompre facilement.

Dans chaque moyen d'accouplement, ladite pièce de liaison peut être une rotule disposée dans une cage hémisphérique d'un embout situé à l'extrémité de la biellette et solidaire de cette extrémité, ce qui permet de donner à la biellette une grande liberté de mobilité par rapport à ses points de fixation sur le patient.

Une deuxième section dudit fil comprenant sa deuxième extrémité peut être noyée dans une plaque maxillaire ou mandibulaire, ce qui est un mode de réalisation simple et robuste de l'invention.

Dans chaque moyen d'accouplement, ladite pièce de liaison peut être solidaire d'une tige disposée dans une pièce de fixation, une première section dudit fil comprenant sa première extrémité pouvant être disposée dans un logement de ladite pièce de fixation de façon à être maintenue rectiligne, ce qui est un moyen simple de réaliser la mobilité voulue des biellettes par rapport à la mâchoire du patient.

Ladite première section peut avoir une longueur comprise entre 2,0 et 3,0 mm, ce qui permet de fixer le fil de façon suffisamment solide pour pouvoir le tordre sans que cette fixation ne risque de rompre.

Ladite tige peut être orientée sensiblement perpendiculairement à ladite première section dudit fil, ce qui permet d'optimiser l'encombrement du dispositif selon l'invention dans la bouche du patient.

Ledit fil peut comporter une section libre située entre la première et la deuxième section, ladite section libre mesurant entre 10 et 20 mm, ce qui donne à l'orthodontiste suffisamment d'espace pour effectuer une torsion du fil.

La présente invention concerne également un procédé de fabrication d'un dispositif orthodontique selon l invention et défini par la revendication 9, caractérisé en ce que ladite première section est fixée dans le logement de la pièce de fixation par brasage, ladite pièce de fixation comportant au moins un passage entre l'extérieur de ladite pièce de fixation et ledit logement, un métal d'apport étant déposé dans ledit passage.

Grâce à ces dispositions, la fixation du fil à la pièce de fixation est solide et ne risque pas de rompre lors de la torsion du fil.

### Brève description des dessins

La présente invention et ses avantages apparaîtront mieux dans la description suivante de plusieurs modes de réalisation donnés à titre d'exemples non limitatifs, en référence aux dessins annexés, dans lesquels :
[Fig 1] est une vue schématique d'un mode de réalisation préféré d'un dispositif orthodontique selon l'invention avant pose sur un patient, le fil supérieur étant représenté hors du dispositif.
[Fig 2] est une vue éclatée d'un détail de la fig. 1.
[Fig 3] est une vue en perspective du dispositif orthodontique de la fig. 1, posé sur un moulage dentaire, en position de mâchoire fermée.
[Fig 4] est une vue de face du dispositif orthodontique de la fig. 1, posé sur un moulage dentaire, en position de mâchoire ouverte.
[Fig 5] est une vue de face du dispositif orthodontique de la fig. 1, posé sur un moulage dentaire, en position de mâchoire fermée et avec un décalage latéral du maxillaire par rapport à la mandibule.
[Fig 6] est une vue de face du dispositif orthodontique de la fig. 1, posé sur un moulage dentaire, le maxillaire et la mandibule étant posées à plat, les éléments inférieurs et supérieurs des biellettes étant séparés.
[Fig 7] est une vue en perspective du dispositif orthodontique de la fig. 1, en position de mâchoire fermée.

### Description des modes de réalisation

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures. Par ailleurs, les positions géométriques indiquées dans la description, telles que « perpendiculaire », « parallèle », « symétrique » ne sont pas limitées au sens strict défini en géométrie, mais s'étendent à des positions géométriques qui sont proches, c'est-à-dire qui acceptent une certaine tolérance dans le domaine technique considéré, sans influence sur le résultat obtenu. Cette tolérance est notamment introduite par l'adverbe « sensiblement », sans que ce terme soit nécessairement répété devant chaque adjectif.

En référence aux figures, le dispositif orthodontique selon l'invention est apte à provoquer un déplacement d'une mandibule 1 par rapport à un maxillaire 2. Le dispositif orthodontique comporte une partie inférieure, solidaire de la mandibule 1, une partie supérieure, solidaire du maxillaire 2, et deux biellettes 3 télescopiques, reliant les parties supérieure et inférieure. Une première biellette 3 se trouve sur la droite du patient, par exemple sensiblement au niveau des premières molaires de droite pour le haut de la biellette 3, et par exemple sensiblement au niveau de la canine de droite pour le bas de la biellette 3. La seconde biellette 3 se trouve sur la gauche du patient, par exemple sensiblement au niveau des premières molaires de gauche pour le haut de la biellette 3, et par exemple sensiblement au niveau de la canine de gauche pour le bas de la biellette 3.

Dans le cadre de la présente invention, le terme « biellette » désigne un ensemble de deux éléments allongés, l'un coulissant dans l'autre afin que la longueur totale de la biellette soit variable. Habituellement dans les dispositifs selon l'invention, c'est l'élément inférieur qui coulisse dans l'élément supérieur.

Le dispositif d'orthodontie selon l'invention comporte encore, pour chaque biellette 3, des moyens d'accouplement 4 avec d'une part la partie supérieure du dispositif, et d'autre part avec la partie inférieure du dispositif.

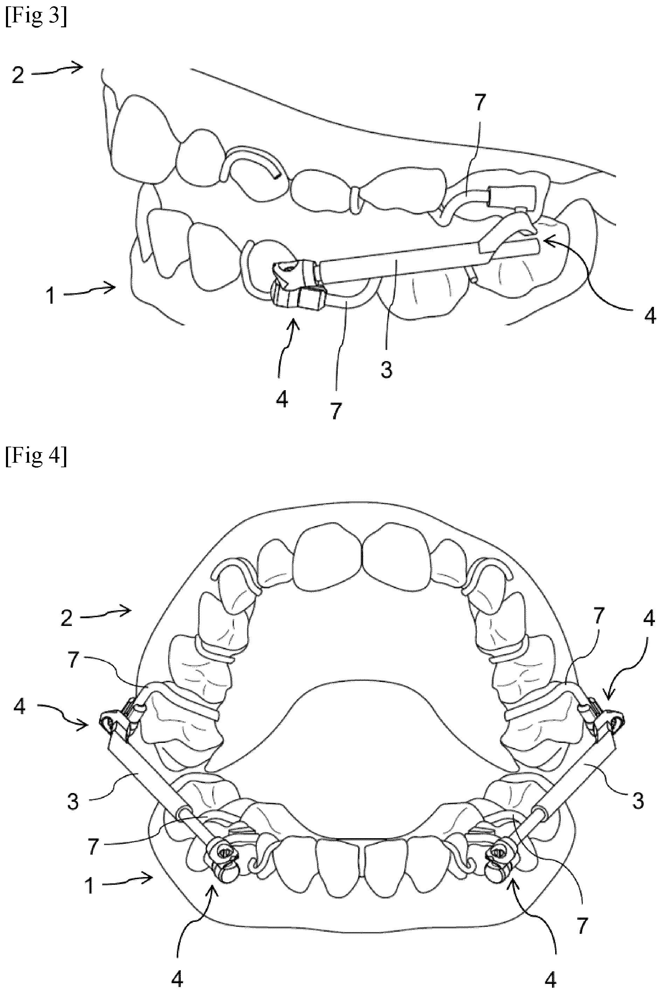

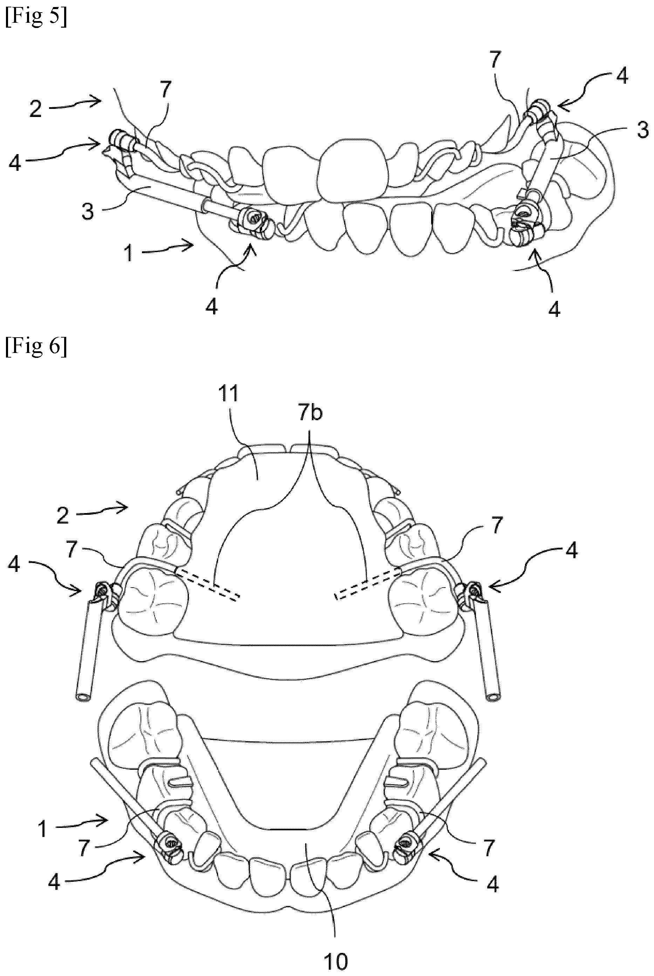

Les moyens d'accouplement 4 permettent de préférence une liberté importante de mouvement des biellettes par rapport à la mâchoire. Une telle mobilité est visible sur la fig. 4 avec un mouvement vers le haut du maxillaire par rapport aux biellettes, et sur la fig. 5 avec un mouvement latéral du haut des biellettes par rapport au mandibule.

Les moyens d'accouplement 4 comportent chacun une pièce de liaison 5. Dans un mode de réalisation préféré de l'invention, la pièce de liaison 5 est une rotule disposée dans une cage hémisphérique d'un embout 6 situé à l'extrémité correspondante de la biellette 3 et solidaire de cette extrémité.

Plus particulièrement, l'articulation des biellettes 3 avec une rotule 5 peut être telle que décrite dans le document EP2198802, afin de permettre une totale liberté d'articulation aux biellettes 3 tant dans un plan antéro-postérieur que dans un plan latéral, et ceci dans un encombrement réduit.

Au niveau d'au moins un moyen d'accouplement 4, le dispositif d'orthodontie selon l'invention comporte un fil 7 dont une première extrémité est solidaire de ladite pièce de liaison, et la seconde extrémité est fixée à la partie inférieure ou supérieure correspondante.

Le fil 7 est configuré pour pouvoir être tordu après pose du dispositif selon l'invention sur un patient. Ainsi, l'orthodontiste peut adapter finement la position des biellettes 3 par rapport à la mandibule et au maxillaire du patient, afin que le déplacement de l'un par rapport à l'autre soit optimal et conforme au programme de traitement. Des petites imprécisions de fabrication ou une correspondance imparfaite entre le dispositif d'orthodontie et l'anatomie du patient, par exemple, pourront être rattrapés par cette étape de torsion.

Un fil 7 peut se trouver sur les moyens d'accouplement 4 supérieurs, entre la partie supérieure du dispositif et les biellettes 3, ou sur les moyens d'accouplement 4 inférieurs, entre la partie inférieure du dispositif et les biellettes 3. De préférence, le dispositif selon l'invention comporte un fil 7 au niveau de chaque moyen d'accouplement 4.

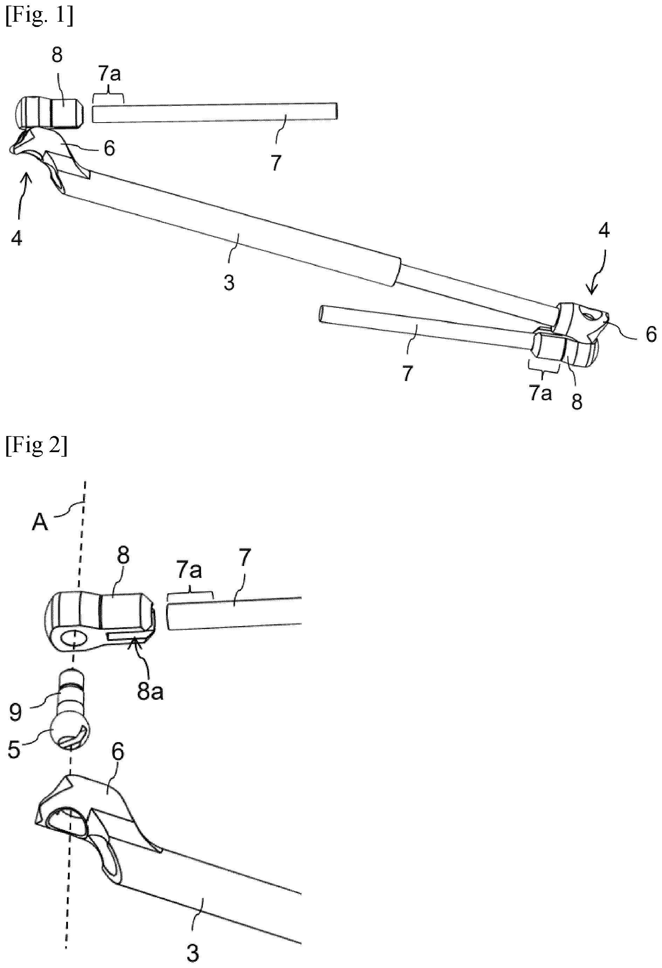

La fixation de la première extrémité du fil 7 à la pièce de liaison 5 peut être réalisée de diverses manières. Dans le mode de réalisation illustré aux fig. 1 et 2, cette fixation est réalisée par l'intermédiaire d'une pièce de fixation 8. La fixation est particulièrement visible sur la fig. 2, avec une vue éclatée selon un axe A. La pièce de fixation 8 est rendue solidaire de la pièce de liaison 5, par exemple par l'intermédiaire d'une tige 9 solidaire de la pièce de liaison 5. La tige 9 est par exemple soudée ou formée d'une pièce avec la pièce de liaison 5. La tige 9 peut être filetée, afin de pouvoir être fixée dans un filetage correspondant de la pièce de fixation 8, ou elle peut être clipsée, ou tout autre moyen d'assemblage avec la pièce de fixation 8.

Dans un mode de réalisation préféré, dont un exemple est illustré aux fig. 1 et 2, la tige 9 est orientée sensiblement perpendiculairement à la première section du fil 7. Ceci permet un encombrement minimum du dispositif selon l'invention.

La première extrémité du fil 7 est ensuite rendue solidaire de la pièce de fixation 8. De préférence, une première section 7a comportant la première extrémité du fil 7 est disposée dans un logement de la pièce de fixation 8, afin d'être maintenue rectiligne. Ceci permet un solide ancrage du fil 7 par rapport aux biellettes 3, et permet d'éviter que la première extrémité du fil 7 ne bouge lors de sa torsion. Pour atteindre ce résultat, la première section 7a du fil 7 a de préférence une longueur comprise entre 2,0 et 3,0 mm, par exemple 2,5 mm.

La première section 7a est visible en fig. 1. Sur cette figure, dans le moyen d'accouplement 4 supérieur, la première section 7a n'est pas insérée dans le logement de la pièce de liaison 8, alors que dans le moyen d'accouplement 4 inférieur, la première section 7a est insérée dans le logement de la pièce de liaison 8.

La première section 7a peut être fixée dans le logement de la pièce de fixation 8 par toute technique appropriée, telle que collage, brasage ou soudure laser. La pièce de fixation 8 comporte de préférence au moins un passage 8a entre l'extérieur de la pièce et le logement, telle qu'au moins une fenêtre ou fente. Le passage 8a est orienté latéralement, c'est-à-dire qu'il donne accès à un côté de la première section 7a du fil 7 lorsque celle-ci se trouve dans le logement. Le passage 8a permet le dépôt d'un métal d'apport, dans le cas du brasage, ou d'une colle, afin de fixer ensemble le fil 7 et la pièce de fixation 8.

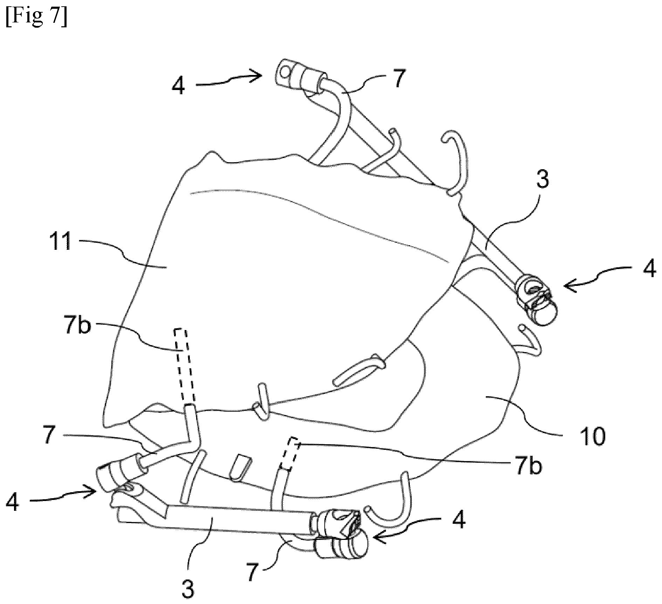

La fixation de la deuxième extrémité du fil 7 à la partie inférieure ou supérieure correspondante du dispositif peut varier selon le type de partie inférieure ou supérieure. Dans un mode de réalisation préféré, illustré en particulier par les fig. 6 et 7, la partie inférieure comporte une plaque mandibulaire 10 et la partie supérieure une plaque maxillaire 11, aussi appelée plaque palatine, et une deuxième section 7b du fil 7 comprenant sa deuxième extrémité est noyée dans la plaque correspondante, tel qu'illustré en fig. 6 et 7. Une telle plaque est réalisée généralement en résine acrylique.

Le fil 7 comporte une section libre à laquelle a accès l'orthodontiste, et sur laquelle il peut opérer la torsion. Dans le mode de réalisation des fig. 1 à 7, la section libre se trouve entre la première section 7a et la deuxième section 7b. La section libre a une longueur de préférence comprise entre 10 et 20 mm, par exemple 15 mm, ce qui donne à l'orthodontiste une liberté de mouvement suffisante pour opérer la torsion, tout en maintenant une rigidité suffisante pour que le dispositif d'orthodontie puisse être efficace.

Le fil 7 a la flexibilité nécessaire pour être tordu par un orthodontiste, mais il n'est pas trop flexible, afin que son orientation et sa forme ne soit pas altérée lors du port normal du dispositif d'orthodontie par le patient, et que la torsion opérée par l'orthodontiste soit durable. La torsion peut être effectuée avec un outil manuel, tel qu'une pince, ou encore par une machine.

Le fil 7 peut être réalisé dans tout matériau compatible avec l'orthodontie et suffisamment solide et flexible, tel qu'un alliage chrome-cobalt, un polyétheréthercétone (PEEK), ou encore un polyaryléthercétone (PAEK).

Dans le cadre de la présente invention, le terme « alliage chrome-cobalt » désigne tout alliage dont la somme des teneurs en chrome et en cobalt est supérieure ou égale à 50%.

Le fil 7 a de préférence un diamètre compris entre 0.9 et 2.0 mm, par exemple 1,3 mm.

Le module de rigidité du fil 7 peut être compris entre 65 et 90 GPa, de préférence entre 75 et 80 GPa, par exemple 77 GPa.

Le fil 7 a de préférence une élasticité dure, c'est-à-dire qu'en cas de fortes tensions, il ne subit que peu de déformation. Le module d'élasticité du fil 7 peut être compris entre 150 et 230 Gpa, de préférence entre 180 et 200 GPa par exemple 190 GPa.

La présente invention n'est bien entendu pas limitée aux exemples de réalisation décrits mais s'étend à toute modification et variante évidentes pour un homme du métier. En outre, les caractéristiques techniques des différents modes de réalisation et variantes mentionnés ci-dessus peuvent être, en totalité ou pour certaines d'entre elles, combinées entre elles.

## Revendications

1. Dispositif orthodontique apte à provoquer un déplacement d'une mandibule par rapport à un maxillaire, comportant une partie inférieure apte à être solidaire de ladite mandibule, une partie supérieure apte à être solidaire dudit maxillaire, et deux biellettes (3) télescopiques reliant les parties supérieure et inférieure, ledit dispositif comprenant, pour chaque biellette (3), des moyens d'accouplement (4) avec la partie inférieure et avec la partie supérieure, chaque moyen d'accouplement (4) comportant une pièce de liaison (5) mobile par rapport à une des extrémités de ladite biellette (3), tel que pour au moins un moyen d'accouplement (4), ledit dispositif comporte un fil (7) dont une première extrémité est solidaire de ladite pièce de liaison (5), et la seconde extrémité est fixée à la partie inférieure ou supérieure correspondante, ***et que*** dans chaque moyen d'accouplement (4), ladite pièce de liaison (5) est solidaire d'une tige (9) disposée dans une pièce de fixation (8), une première section (7a) dudit fil (7) comprenant sa première extrémité étant disposée dans un logement de ladite pièce de fixation (8) de façon à être maintenue rectiligne, ***et qu*'**une deuxième section (7b) dudit fil (7) comprenant sa deuxième extrémité est noyée dans une plaque maxillaire (11) ou mandibulaire (10), ***et que*** ledit fil (7) comporte une section libre située entre la première section (7a) et la deuxième section (7b), ladite section libre étant accessible à un praticien après fixation dudit dispositif sur un patient et étant configuré pour pouvoir être tordue par un praticien après fixation dudit dispositif sur un patient pour adapter finement la position des biellettes (3) par rapport à la mandibule et au maxillaire du patient.

2. Dispositif orthodontique selon la revendication 1, ***caractérisé* en ce que** ledit fil (7) a un diamètre compris entre 0.9 et 2.0 mm.

3. Dispositif orthodontique selon l'une quelconque des revendications 1 à 2, ***caractérisé* en ce que** ledit fil (7) a un module de rigidité compris entre 65 et 90 GPa et un module d'élasticité compris entre 150 et 230 GPa.

4. Dispositif orthodontique selon l'une quelconque des revendications 1 à 3, ***caractérisé* en ce que** ledit fil (7) est en alliage chrome-cobalt ou en acier inoxydable.

5. Dispositif orthodontique selon l'une quelconque des revendications 1 à 4, ***caractérisé* en ce que** dans chaque moyen d'accouplement (4) ladite pièce de liaison (5) est une rotule disposée dans une cage hémisphérique d'un embout (6) situé à l'extrémité de la biellette (3) et solidaire de cette extrémité.

6. Dispositif orthodontique selon la revendication *1,* ***caractérisé* en ce que** ladite première section (7a) a une longueur comprise entre 2,0 et 3,0 mm.

7. Dispositif orthodontique selon l'une quelconque des revendications 1 à 6, ***caractérisé* en ce que** ladite tige (9) est orientée sensiblement perpendiculairement à ladite première section (7a) dudit fil (7).

8. Dispositif orthodontique selon la revendication 1 et l'une quelconque des revendications 7 à 9, ***caractérisé* en ce que** ladite section libre mesurant entre 10 et 20 mm.

9. Procédé de fabrication d'un dispositif orthodontique selon l'une quelconque des revendications 1 à 8, ***caractérisé* en ce que** ladite première section (7a) est fixée dans le logement de la pièce de fixation (8) par brasage, ladite pièce de fixation (8) comportant au moins un passage (8a) entre l'extérieur de ladite pièce de fixation (8) et ledit logement, un métal d'apport étant déposé dans ledit passage (8a).

## Patentansprüche

1. Orthodontische Vorrichtung, die dazu geeignet ist, eine Verlagerung eines Unterkiefers gegenüber einem Oberkiefer zu bewirken, umfassend einen unteren Teil, der dazu geeignet ist, mit dem Unterkiefer fest verbunden zu sein, einen oberen Teil, der dazu geeignet ist, mit dem Oberkiefer fest verbunden zu sein, und zwei teleskopische Verbindungsstangen (3), die den oberen und den unteren Teil miteinander verbinden, wobei die Vorrichtung für jede Verbindungsstange (3) Kopplungsmittel (4) mit dem unteren Teil und mit dem oberen Teil umfasst, wobei jedes Kopplungsmittel (4) ein Verbindungsstück (5) umfasst, das gegenüber einem der Enden der Verbindungsstange (3) beweglich ist, wobei die Vorrichtung für mindestens ein Kopplungsmittel (4) einen Draht (7) umfasst, dessen erstes Ende mit dem Verbindungsstück (5) fest verbunden ist und dessen zweites Ende an dem entsprechenden unteren oder oberen Teil befestigt ist, und wobei bei jedem Kopplungsmittel (4) das Verbindungsstück (5) mit einem Schaft (9) fest verbunden ist, der in einem Befestigungsstück (8) angeordnet ist, wobei ein erster Abschnitt (7a) des Drahtes (7), der dessen erstes Ende umfasst, in einer Aufnahme des Befestigungsstücks (8) derart angeordnet ist, dass er geradlinig gehalten wird, und wobei ein zweiter Abschnitt (7b) des Drahtes (7), der dessen zweites Ende umfasst, in eine Oberkieferplatte (11) oder Unterkieferplatte (10) eingebettet ist, und wobei der Draht (7) einen freien Abschnitt aufweist, der zwischen dem ersten Abschnitt (7a) und dem zweiten Abschnitt (7b) angeordnet ist, wobei der freie Abschnitt nach der Befestigung der Vorrichtung an einem Patienten für einen Behandler zugänglich und dazu ausgebildet ist, nach der Befestigung der Vorrichtung an einem Patienten von einem Behandler gebogen zu werden, um die Position der Verbindungsstangen (3) gegenüber dem Unterkiefer und dem Oberkiefer des Patienten fein einzustellen.

2. Orthodontische Vorrichtung nach Anspruch 1, **dadurch gekennzeichnet, dass** der Draht (7) einen Durchmesser zwischen 0,9 und 2,0 mm aufweist.

3. Orthodontische Vorrichtung nach einem der Ansprüche 1 bis 2, **dadurch gekennzeichnet, dass** der Draht (7) einen Schubmodul zwischen 65 und 90 GPa und einen Elastizitätsmodul zwischen 150 und 230 GPa aufweist.

4. Orthodontische Vorrichtung nach einem der Ansprüche 1 bis 3, **dadurch gekennzeichnet, dass** der Draht (7) aus einer Chrom-Kobalt-Legierung oder aus rostfreiem Stahl besteht.

5. Orthodontische Vorrichtung nach einem der Ansprüche 1 bis 4, **dadurch gekennzeichnet, dass** bei jedem Kopplungsmittel (4) das Verbindungsstück (5) eine Kugel ist, die in einem halbkugelförmigen Käfig eines Endstücks (6) angeordnet ist, das sich am Ende der Verbindungsstange (3) befindet und mit diesem Ende fest verbunden ist.

6. Orthodontische Vorrichtung nach Anspruch 1, **dadurch gekennzeichnet, dass** der erste Abschnitt (7a) eine Länge zwischen 2,0 und 3,0 mm aufweist.

7. Orthodontische Vorrichtung nach einem der Ansprüche 1 bis 6, **dadurch gekennzeichnet, dass** der Schaft (9) im Wesentlichen senkrecht zu dem ersten Abschnitt (7a) des Drahtes (7) ausgerichtet ist.

8. Orthodontische Vorrichtung nach Anspruch 1 und einem der Ansprüche 7 bis 9, **dadurch gekennzeichnet, dass** der freie Abschnitt eine Länge zwischen 10 und 20 mm aufweist.

9. Verfahren zur Herstellung einer orthodontischen Vorrichtung nach einem der Ansprüche 1 bis 8, **dadurch gekennzeichnet, dass** der erste Abschnitt (7a) durch Hartlöten in der Aufnahme des Befestigungsstücks (8) befestigt wird, wobei das Befestigungsstück (8) mindestens einen Durchgang (8a) zwischen der Außenseite des Befestigungsstücks (8) und der Aufnahme aufweist und ein Zusatzmetall in dem Durchgang (8a) abgeschieden wird.

## Claims

1. Orthodontic device capable of causing displacement of a mandible relative to a maxilla, comprising a lower part capable of being secured to said mandible, an upper part capable of being secured to said maxilla, and two telescopic linkages (3) connecting the upper and lower parts, said device comprising, for each linkage (3), coupling means (4) with the lower part and with the upper part, each coupling means (4) comprising a connecting part (5) movable relative to one of the ends of said linkage (3), wherein, for at least one coupling means (4), said device comprises a wire (7) having a first end secured to said connecting part (5) and a second end fixed to the corresponding lower or upper part, and wherein, in each coupling means (4), said connecting part (5) is secured to a rod (9) arranged in a fastening part (8), a first section (7a) of said wire (7) comprising its first end being arranged in a housing of said fastening part (8) so as to be held straight, and wherein a second section (7b) of said wire (7) comprising its second end is embedded in a maxillary plate (11) or mandibular plate (10), and wherein said wire (7) comprises a free section located between the first section (7a) and the second section (7b), said free section being accessible to a practitioner after said device has been fitted to a patient and being configured so that it can be bent by a practitioner after said device has been fitted to a patient in order to finely adjust the position of the linkages (3) relative to the patient's mandible and maxilla.

2. Orthodontic device according to claim 1, **characterised in that** said wire (7) has a diameter of between 0.9 and 2.0 mm.

3. Orthodontic device according to any one of claims 1 to 2, **characterised in that** said wire (7) has a shear modulus of between 65 and 90 GPa and a modulus of elasticity of between 150 and 230 GPa.

4. Orthodontic device according to any one of claims 1 to 3, **characterised in that** said wire (7) is made of a chromium-cobalt alloy or stainless steel.

5. Orthodontic device according to any one of claims 1 to 4, **characterised in that**, in each coupling means (4), said connecting part (5) is a ball joint arranged in a hemispherical cage of an end fitting (6) located at the end of the linkage (3) and secured to that end.

6. Orthodontic device according to claim 1, **characterised in that** said first section (7a) has a length of between 2.0 and 3.0 mm.

7. Orthodontic device according to any one of claims 1 to 6, **characterised in that** said rod (9) is oriented substantially perpendicular to said first section (7a) of said wire (7).

8. Orthodontic device according to claim 1 and any one of claims 7 to 9, **characterised in that** said free section measures between 10 and 20 mm.

9. Method for manufacturing an orthodontic device according to any one of claims 1 to 8, **characterised in that** said first section (7a) is fixed in the housing of the fastening part (8) by brazing, said fastening part (8) comprising at least one passage (8a) between the outside of said fastening part (8) and said housing, a filler metal being deposited in said passage (8a).
